# EUROPEAN PATENT APPLICATION

(11) **EP 4 181 284 A1**
(43) Date of publication of application: **17.05.2023**
(21) Application number: 21218257.0
(22) Date of filing: 30.12.2021
(51) Int. Cl.: H01M 50/209, H01M 50/503, H01M 50/509

(54) **BATTERY PACK**

(30) Priority: 16.11.2021 CN 202111351904
(71) Applicant: CALB Co., Ltd., Changzhou City, Jiangsu Province (CN)
(72) Inventor: ZHAO, Dong, Changzhou City, Jiangsu Province (CN); KONG, Fanming, Changzhou City, Jiangsu Province (CN); TIAN, Ruisheng, Changzhou City, Jiangsu Province (CN)
(74) Representative: Becker, Eberhard

(57) **Abstract**

A battery pack includes a plurality of battery apparatuses (1). Each battery apparatus (1) includes lead-out terminal busbars (2), and the lead-out terminal busbars (2) are disposed at end portions of each battery apparatus (1) in a battery arrangement direction. At least one of the lead-out terminal busbars (2) has at least two connecting branches, and the at least two connecting branches are configured to be respectively connected to a battery disconnect unit (5) and/or other battery apparatuses (1) in the battery pack.

## Description

### BACKGROUND

### Technical Field

The disclosure relates to the technical field of batteries, and in particular, relates to a battery pack.

### Description of Related Art

In the related art, the battery apparatuses inside a battery pack box are generally connected through copper bars. The busbars at the end portions of the battery apparatuses are configured to act as the output terminals of the battery apparatuses and are configured to be connected to the copper bars. The connection between the busbars at the end portions of the battery apparatuses and the copper bars may directly affect the connection yield and the connection efficiency among the battery apparatuses, and therefore, may affect the yield of the battery pack.

### SUMMARY

The disclosure provides a battery pack.

The battery pack includes a plurality of battery apparatuses. Each battery apparatus includes lead-out terminal busbars, and the lead-out terminal busbars are disposed at end portions of each battery apparatus in a battery arrangement direction. At least one of the lead-out terminal busbars has at least two connecting branches, and the at least two connecting branches are configured to be respectively connected to a battery disconnect unit and/or other battery apparatuses in the battery pack.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a structure of a battery pack according to an embodiment of the disclosure.
FIG. 2 is a schematic view of a structure of a lead-out terminal busbar in the battery pack according to an embodiment of the disclosure.
FIG. 3 is a schematic view of a structure of a battery pack provided by the related art.
FIG. 4 is a schematic view of a structure of a battery pack according to another embodiment of the disclosure.
FIG. 5 is a schematic view of a structure of a battery pack according to another embodiment of the disclosure.
FIG. 6 is a schematic view of a structure of a battery pack according to another embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

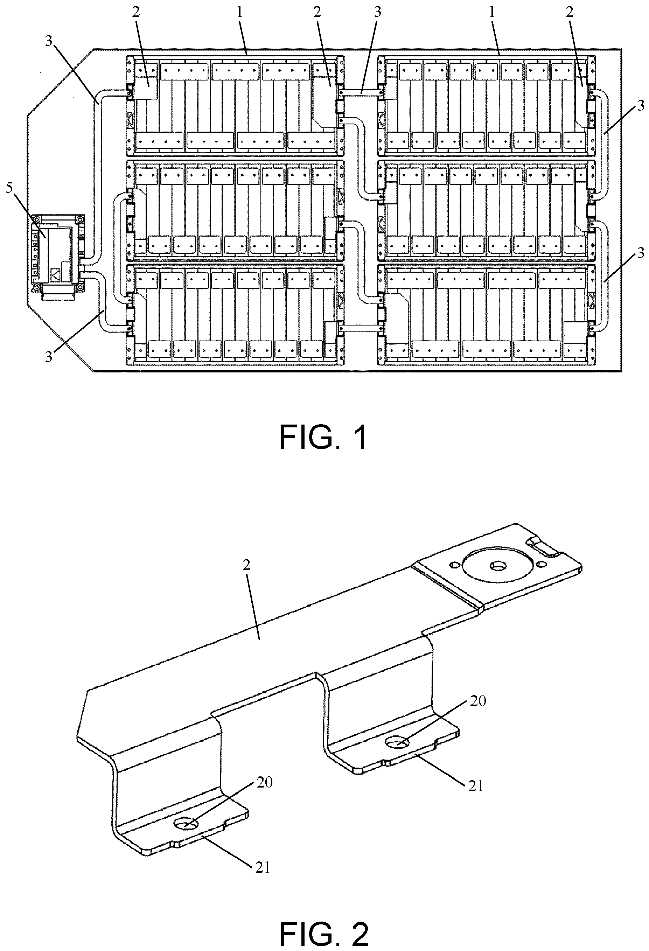

The disclosure provides a battery pack. As shown in FIG. 1 and FIG. 2, the battery pack includes a plurality of battery apparatuses 1. Each battery apparatus 1 includes a plurality of lead-out terminal busbars 2, and the lead-out terminal busbars 2 are disposed at end portions of each battery apparatus 1 in a battery arrangement direction. At least one of the lead-out terminal busbars 2 has at least two connecting branches 21, and the at least two connecting branches 21 are configured to be respectively connected to a battery disconnect unit (BDU) 5 and/or other battery apparatuses 1 in the battery pack.

Each "lead-out terminal busbar 2" is an output terminal of a plurality of batteries after the batteries are electrically connected in each battery apparatus 1, and is configured to accomplish power output of the entire battery apparatus 1. The lead-out terminal busbars 2 are generally connected to electrode posts of the batteries, and the electrode posts are located at the end portions in each battery apparatus 1. The battery apparatus 1 may be connected to the battery disconnect unit 5 or other battery apparatuses 1 through the lead-out terminal busbars 2.

In the battery pack provided by the embodiments of the disclosure, each battery apparatus 1 is provided with the lead-out terminal busbars 2 connected thereto, and some lead-out terminal busbars 2 are provided with at least two connecting branches 21. Each battery apparatus 1 may be simultaneously connected to two or a plurality of different structures through the at least two connecting branches 21. For instance, one battery apparatus 1 may be electrically connected to two other battery apparatuses 1 or may be connected to another battery apparatus 1 and the battery disconnect unit 5, through the two connecting branches 21 of the lead-out terminal busbar 2. In this way, multiple battery apparatuses 1 may be conveniently connected in parallel and may be directly connected in series with one battery apparatus 1.

For conventional battery apparatuses, when it is intended to be connected in series and parallel, one lead-out terminal busbar 2 and a plurality of conductor bars 3 are required to be stacked and connected. This may cause problems such as a longer connection length of the conductor bars 3, poor connection between the lead-out terminal busbars 2 and the conductor bars 3, excessive resistance, and low overcurrent efficiency. In the present disclosure, the multiple connecting branches 21 of the lead-out terminal busbar 2 may be correspondingly connected to the multiple conductor bars 3, and in this way, problems such as poor connection caused by stacked connection, excessive resistance, low overcurrent efficiency, etc. may be prevented from occurring. Moreover, the connection length of the conductor bars 3 among the battery apparatuses 1 may be reduced, the increase in internal resistance and the decrease in output terminal voltage caused by the conductor bars 3 may be reduced and addressed, and the production process difficulty and production costs of the conductor bars 3 may also be reduced.

Exemplarily, each lead-out terminal busbar 2 is an integrated structure and is specifically processed and formed through metal sheet processing.

Exemplarily, the lead-out terminal busbars 2 are aluminum bars.

Exemplarily, each lead-out terminal busbar 2 may specifically include two connecting branches 21.

In some embodiments, as shown in FIG. 1 and FIG. 2, the battery pack provided by the disclosure further includes the conductor bars 3. The conductor bars 3 are configured to be connected to the lead-out terminal busbars 2 of the battery apparatuses 1 and/or the battery disconnect unit 5, so as to connect the battery apparatuses 1 or connect the battery apparatuses 1 to the battery disconnect unit 5. The battery disconnect unit 5 is configured to control charging and discharging of the battery pack. In other words, the lead-out terminal busbars 2 of each battery apparatus 1 are connected to one another through the conductor bars 3, and the battery apparatuses 1 electrically connected to each other may also be connected to the battery disconnect unit 5 of the battery pack through the conductor bars 3.

Exemplarily, the conductor bars 3 are processed and formed through metal sheet processing and are generally copper bars.

In some embodiments, each connecting branch 21 of each of the lead-out terminal busbars 2 is provided with a mounting hole 20. To be specific, each conductor bar 3 is also provided with mounting holes. The lead-out terminal busbars 2 and the conductor bars 3 are connected through connectors penetrating these mounting holes. To be specific, the connectors may be bolts or screws.

In some embodiments, in the battery pack provided by the disclosure, all the lead-out terminal busbars 2 include at least two connecting branches. In other words, the lead-out terminal busbars 2 at the end portions of each battery apparatus 1 have the same structure, and the lead-out terminal busbars 2 all have at least two connecting branches. In this way, the requirements and restrictions on the position sequence during the assembly of the battery apparatuses 1 may be lowered, and the assembly efficiency of the battery pack may thereby be improved. Besides, the series-parallel connection among the battery apparatuses 1 may be facilitated, connection difficulty among the battery apparatuses 1 may be lowered, the connection length of the conductor bars 3 among the battery apparatuses 1 may be reduced, and the increase in internal resistance and the decrease in output terminal voltage caused by the conductor bars 3 may be reduced.

In some embodiments, each battery apparatus 1 includes two lead-out terminal busbars 2, and the two lead-out terminal busbars 2 are respectively disposed at two end portions of the battery apparatus 1 in the battery arrangement direction. Generally, a plurality of batteries in each battery apparatus 1 are connected in series and parallel, and finally, the two lead-out terminal busbars 2 are connected to the electrode posts of the batteries located at the two end portions, respectively, to form a positive lead-out terminal and a negative lead-out terminal of each battery apparatus 1. Specifically, the two lead-out terminal busbars 2 are respectively connected to a positive electrode post and a negative electrode post of the batteries located at the two end portions.

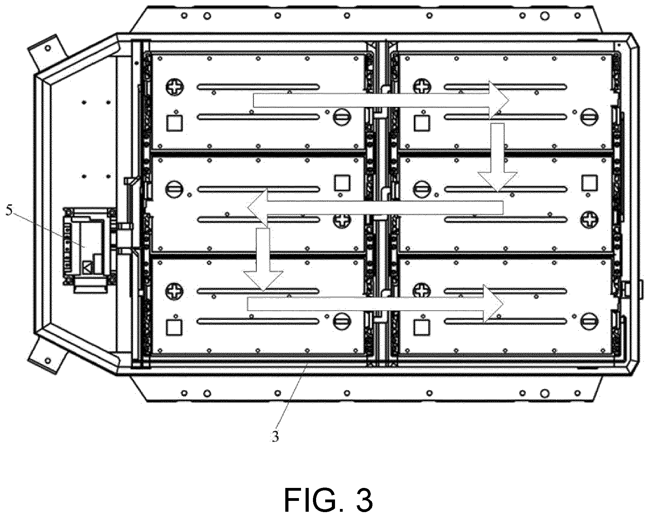

In some embodiments, the battery apparatuses are arranged in odd-numbered columns, that is, the battery pack includes odd-numbered battery apparatuses. The odd-numbered columns are greater than one column, for example, the odd-numbered columns may be three columns or may be five columns. When the battery apparatuses of each column are connected in series end to end, a total positive output terminal and a total negative output terminal of the battery apparatuses of the odd-numbered columns connected in series are respectively located at two sides of the battery pack. For instance, as shown in FIG. 3, the three columns of battery apparatuses are connected in series end to end in an "S" shape. Two ends of the "S" shape are respectively the total positive output terminal and the total negative output terminal, which are located at two sides of the battery pack, respectively. The total positive output terminal and the total negative output terminal of the battery pack are respectively required to be connected to a positive electrode and a negative electrode of a relay in the battery disconnect unit 5, so that electrical connection between the battery pack and a vehicle as a whole is implemented. When the total positive output terminal and the total negative output terminal are separately located at two sides of the battery pack, longer conductor bars 3 are required to connect the total positive output terminal and the total negative output terminal to the battery disconnect unit 5 together. However, the longer conductor bars 3 may produce a greater internal resistance, which causes a voltage differences between the two ends of each conductor bar 3, and the output terminal voltage may drop. In addition, the production process difficulty and production costs brought by the longer conductor bars 3 are also greater.

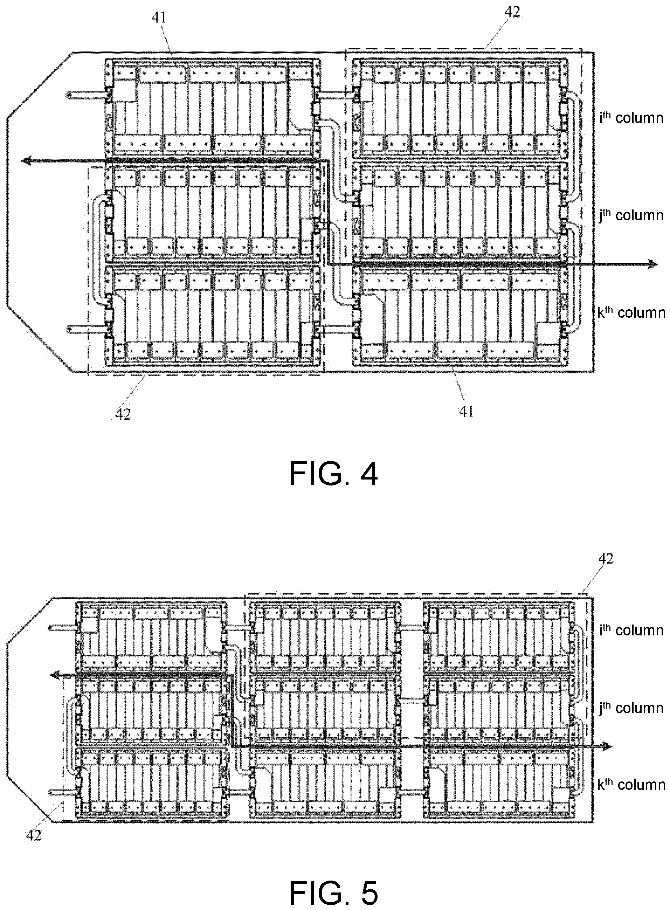

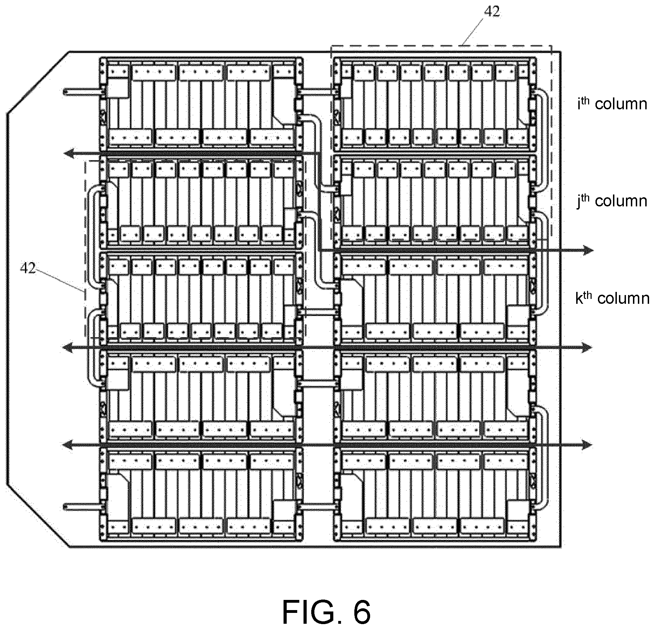

In the embodiments of the disclosure, the battery apparatuses in odd-numbered columns are divided into connecting units in even-numbered columns. With reference to FIG. 4, FIG. 5, and FIG. 6, the connecting units in each column are separated by solid lines with arrows at both ends. For instance, the battery apparatuses in three columns are divided into two columns of connecting units in FIG. 4 and FIG. 5, and the battery apparatuses in five columns are divided into four columns of connecting units in FIG. 6. To be specific, a column direction of the connecting units is consistent with a column direction of the battery apparatuses 1. For instance, the column direction of the battery apparatuses 1 shown in FIG. 4, FIG. 5, and FIG. 6 is consistent with the column direction of the batteries in the battery apparatuses 1, so that the column direction of the connecting units is also arranged in the battery arrangement direction of the battery apparatuses 1.

To be specific, the connecting units in even-numbered columns include first connecting units 41 and second connecting units 42. Herein, each first connecting unit 41 includes the battery apparatuses 1 in one column of battery apparatuses, and each second connecting unit 42 includes the battery apparatuses 1 in at least two adjacent columns of battery apparatuses. In other words, each first connecting unit 41 is formed by the battery apparatuses 1 in one column of battery apparatuses, and each second connecting unit 42 is formed by the battery apparatuses 1 in at least two columns of battery apparatuses. As such, through the arrangement and combination of the first connecting units 41 and the second connecting units 42, the battery apparatuses in odd-numbered columns may be divided into the connecting units in even-numbered columns.

To be specific, the connecting units of each column are connected in series in sequence. Since the entire battery pack has connecting units in even-numbered columns, the two total output terminals formed after the connecting units of each column are connected in series are located at a same side of the battery pack. The two total output terminals, formed by the connecting units connected in series of each column, are a positive output terminal and a negative output terminal after all the battery apparatuses 1 are electrically connected, and are also the two total output terminals of the entire battery pack.

In the embodiments of the disclosure, since the total positive output terminal and the total negative output terminal are located at the same side of the battery pack, shorter conductor bars 3 are required to connect the total positive output terminal and the total negative output terminal to the battery disconnect unit together. In this way, the connection length of the conductor bars 3 among the battery apparatuses 1 may be reduced, the increase in internal resistance and the decrease in output terminal voltage caused by the conductor bars 3 may be reduced, and the production process difficulty and production costs of the conductor bars 3 may also be reduced.

In some embodiments, the connecting units in each column may be connected in series in sequence in a " 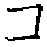 " shape or in a " 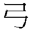 " shape.

Exemplarily, as shown in FIG. 4 and FIG. 5, all battery apparatuses are divided into two columns of connecting units, and the two columns of connecting units are connected in series end to end in a " 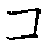 " shape. The two ends of the " 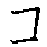 " shape correspond to the two total output terminals formed by connecting two columns of connecting units in series. The two ends are located at the same side, that is, the two total output terminals of the battery pack are located at the same side of the battery pack.

Similarly, as shown in FIG. 6, all battery apparatuses are divided into four columns of connecting units, and the four columns of connecting units are connected in series in sequence end to end in a " 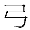 " shape. The two ends of the " 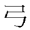 " shape are located at the same side, that is, the two total output terminals of the battery pack are located at the same side of the battery pack.

In some embodiments, as shown in FIG. 4 and FIG. 5, the columns of battery apparatuses in the second connecting units 42 are respectively connected to different connecting branches of the lead-out terminal busbar 2 of the battery apparatuses 1 in the first connecting units 41. That is, through the lead-out terminal busbar 2 of the battery apparatuses 1 in the first connecting units 41, the different columns of battery apparatuses 1 in the second connecting units 42 may be connected in parallel with one another and may then be connected in series with the battery apparatuses 1 of the first connecting units 41. To be specific, each lead-out terminal busbar 2 in each battery apparatus 1 in each first connecting unit 41 has at least two connecting branches. By connecting the at least two connecting branches to the battery apparatus in different columns of the adjacent second connecting unit 42, the battery apparatuses in each column of the second connecting units 42 may be connected in series with the battery apparatuses 1 of the first connecting units 41.

Exemplarily, each second connecting unit 42 includes the battery apparatuses 1 in two adjacent columns of battery apparatuses. That is, each second connecting unit 42 is formed by the battery apparatuses 1 in two columns of battery apparatuses, and each first connecting unit 41 is formed by the battery apparatuses 1 in one column of battery apparatuses. As such, through the arrangement and combination of the first connecting units 41 and the second connecting units 42, the three columns of battery apparatuses may be divided into two columns of connecting units In this way, the series connection of the battery apparatuses in the odd-numbered columns may be changed into the series connection of the connecting units in the even-numbered columns, so that the two total output terminals after the series connection are located at the same side.

In some embodiments, as shown in FIG. 4, FIG. 5, and FIG. 6, the second connecting units 42 in two adjacent columns of the connecting units are arranged in an alternating manner. In other words, the second connecting units 42 in two adjacent columns of connecting units are not arranged in the same row. This arrangement and combination conform to the arrangement and layout of the battery apparatuses, which may make the battery apparatuses closely arranged, and the space in the battery pack may thus be rationally used.

In some embodiments, as shown in FIG. 4, FIG. 5, and FIG. 6, the battery apparatuses in odd-numbered columns include three adjacent columns of battery apparatuses. The three adjacent columns of battery apparatuses are divided into two columns of connecting units, and each column of battery apparatuses except the three adjacent columns of battery apparatuses are treated as a column of connecting units.

For instance, the battery apparatuses in an i^{th} column, the battery apparatuses in a j^{th} column, and the battery apparatuses in a k^{th} column are adjacent to each other in sequence. The battery apparatuses in the i^{th} column, the battery apparatuses in the j^{th} column, and the battery apparatuses in the k^{th} column are divided into two columns of connecting units, and the remaining battery apparatuses 1 each act as one column of connecting units. In this way, only three columns of battery apparatuses among the battery apparatuses in odd-numbered columns are required to be planned and designed, that is, all the battery apparatuses 1 in odd-numbered columns may be divided into the connecting units in even-numbered columns, so that after all connecting units are connected in series, the two total output terminals are located at the same side, and the battery apparatuses in other columns may be directly connected in series. The design is simple, a shorter length is required for the connection of the conductor bars 3, and the conductor bars 3 may also be connected and may extend through a simple manner.

Exemplarily, it is taken as an example that adjacent battery apparatuses in the i^{th} column, battery apparatuses in the j^{th} column, and battery apparatuses in the k^{th} column are divided into two columns of connecting units. The two columns of connecting units divided by the three columns of battery apparatuses include two second connecting units 42. One of the second connecting units 42 is formed by at least two battery apparatuses 1 among the battery apparatuses in the j^{th} column and the battery apparatuses in the j^{th} column, and the other one of the second connecting units 42 is formed by at least two battery apparatuses 1 among the battery apparatuses in the j^{th} column and the battery apparatuses in the k^{th} column.

Further, the abovementioned two second connecting units 42 among the connecting units in two columns are arranged in an alternating manner.

Preferably, only one second connecting unit 42 is provided in the same column of connecting units.

Exemplarily, as shown in FIG. 4, taking the battery pack including the battery apparatuses in two rows and three columns as an example, wherein the three columns of battery apparatuses are divided into two columns of connecting units. The connecting unit of the first column includes one first connecting unit 41 and one second connecting unit 42, herein, the first connecting unit 41 is formed by the battery apparatuses in the first row and first column, and the second connecting unit 42 is formed by the battery apparatuses in the second row and first column and the battery apparatuses in the second row and second column in parallel. The connecting unit of the second column includes one second connecting unit 42 and one first connecting unit 41, herein, the second connecting unit 42 is formed by the battery apparatuses in the first row and the second column and the battery apparatuses in the first row and the third column in parallel, and the first connecting unit 41 is formed by the battery apparatuses in the second row and the third column. The connecting unit of the first column and the connecting unit of the second column are connected in series, and the two total output terminals are finally formed at the same side.

Preferably, each battery apparatus 1 in the first connecting unit 41 is a 2P8S battery apparatus, and each battery apparatus 1 in the second connecting unit 42 is a 1P16S battery apparatus. As shown in FIG. 4, the battery pack in this embodiment has two 2P8S battery apparatuses and four 1P16S battery apparatuses. Two 2P8S battery apparatuses and four 1P16S battery apparatuses are connected through the conductor bars 3, and finally a 2P48S battery pack is obtained. To be specific, P and S represent parallel connection and series connection respectively. For instance, a 2P8S battery apparatus means that in this battery apparatus, two batteries connected in parallel form a group, and 8 groups of the two batteries connected in parallel are connected in series. In the same way, the 1P16S battery apparatus means that the battery apparatus consists of 16 batteries connected in series.

To be specific, a flowing direction of currents in the battery apparatuses in two rows and three columns is as follows: the currents flow from one 2P8S battery apparatus through two 1P16S battery apparatuses in the second connecting unit 42, then converge to another 2P8S battery apparatus, and afterwards, the currents flow through the two 1P16S battery apparatuses in the other second connecting unit 42 and finally enter the battery disconnect unit.

To be specific, the battery apparatuses in three rows and three columns of are also divided in the same way as the battery apparatuses in two rows and three columns, and are also specifically divided into two rows of connecting units. The difference is that, as shown in FIG. 5, in the battery apparatuses in three rows and three columns, the numbers of battery apparatuses 1 included in the two second connecting units 42 are different. One of the second connecting units 42 includes two battery apparatuses, and the other second connecting unit 42 includes four battery apparatuses.

Further, regarding more than three rows of odd-numbered battery apparatuses, taking the five-column battery apparatuses in FIG. 6 as an example, any three columns of battery apparatuses may be divided into two columns of connecting units according to the above design, and the two columns of connecting units may be connected in series with the remaining columns of battery apparatuses.

In some embodiments, the battery pack of the disclosure further includes a battery disconnect unit, and the battery disconnect unit contains a relay. One end of each of the conductor bars 3 is connected to the lead-out terminal busbar 2, and the other end of each of the conductor bars 3 is connected to the relay. The battery disconnect unit is disposed at one side adjacent to a total output terminal of the battery pack.

For instance, the two total output terminals of the battery pack are located on the same side of the battery pack, so the battery disconnect unit is located at the side where the two total output terminals of the battery pack are located.

In some embodiments, the column direction of the connecting units is consistent with the column direction of the battery apparatuses 1. The column direction may specifically be the same as the battery arrangement direction in the battery apparatuses 1, may be substantially perpendicular to the battery arrangement direction in the battery apparatuses 1, or may be substantially parallel to larger surfaces of the batteries. The " larger surfaces of the batteries" refer to the two surfaces with the largest area among the six surfaces of a square battery.

Exemplarily, the column direction of the connecting units may be the same as an extending direction of the lead-out terminal busbar 2. To be specific, the extending direction of one lead-out terminal busbar 2 refers to the extending direction of the lead-out terminal busbars 2 from the end connected to the electrode post of the battery to the end connected to the conductor bar 3.

For instance, the electrode post of one battery is arranged on the top portion of the battery, one end of one lead-out terminal busbar 2 is connected to the electrode post on the top portion of the battery, and the other end of the lead-out terminal busbar 2 extends to one side of the larger surface of the battery. Herein, the extending direction of the lead-out terminal busbar 2 is substantially identical to the battery arrangement direction in the battery apparatus 1, so that the column direction of the connecting unit is consistent with the battery arrangement direction in the battery apparatus 1.

Alternatively, the electrode post of the battery is disposed on one larger surface of the battery, one end of the lead-out terminal busbar 2 is connected to the electrode post on the larger surface of the battery, and the other end of the lead-out terminal busbar 2 extends and exceeds a side surface of the battery. Herein, the extending direction of the lead-out terminal busbar 2 is parallel to the larger surface of the battery, so that the column direction of the connecting unit is consistent with the extending direction of the larger surface of the battery in the battery apparatus 1 and is substantially perpendicular to the battery arrangement direction.

To be specific, the end portions of the connecting units in the column direction are used to form the total output terminals of the final battery pack. The battery disconnect unit is located at the side where the total output terminals are located, that is, at the end portion in the column direction. Setting the extending direction of the lead-out terminal busbars 2 to be consistent with the column direction of the connecting units may facilitate the connection between the lead-out terminal busbars 2 and the battery disconnect unit.

Exemplarily, in the battery pack provided by the disclosure, each battery apparatus includes at least two batteries arranged in sequence, and the batteries may be square lithium-ion batteries. The battery apparatus may specifically adopt a module structure, that is, a battery module, and the battery apparatus may also adopt a non-module structure.

To be specific, the battery pack of the disclosure is specifically used in the field of electric vehicles.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising a plurality of battery apparatuses (1), wherein each battery apparatus (1) comprises lead-out terminal busbars (2), and the lead-out terminal busbars (2) are disposed at end portions of each battery apparatus (1) in a battery arrangement direction, wherein at least one of the lead-out terminal busbars (2) has at least two connecting branches, and the at least two connecting branches are configured to be respectively connected to a battery disconnect unit (5) and/or other battery apparatuses (1) in the battery pack.

2. The battery pack according to claim 1, wherein each battery apparatus (1) comprises two lead-out terminal busbars (2), and the two lead-out terminal busbars (2) are respectively disposed at two end portions of each battery apparatus (1) in the battery arrangement direction.

3. The battery pack according to claim 2, wherein the battery apparatuses (1) are arranged in odd-numbered columns, the odd-numbered columns are greater than 1 column, the battery apparatuses (1) in the odd-numbered columns are divided into connecting units in even-numbered columns, and a column direction of the connecting units is consistent with a column direction of the battery apparatuses (1),
the connecting units in the even-numbered columns comprise first connecting units (41) and second connecting units (42), each first connecting unit (41) comprises the battery apparatuses (1) in one column of battery apparatuses (1), each second connecting unit (42) comprises the battery apparatuses (1) in at least two adjacent columns of battery apparatuses (1), the connecting units in each column are connected in series in sequence, and two total output terminals formed after the connecting units are connected in series are located at a same side of the battery pack.

4. The battery pack according to claim 3, wherein the columns of battery apparatuses (1) in the second connecting units (42) are respectively connected to different connecting branches of a corresponding one of the lead-out terminal busbars (2) of the battery apparatuses (1) in the first connecting units (41).

5. The battery pack according to claim 3, wherein the connecting units in each column are connected in series in sequence in a 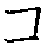 shape or in a 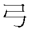 shape.

6. The battery pack according to claim 3, wherein the second connecting units (42) in two adjacent columns of connecting units are arranged in an alternating manner.

7. The battery pack according to claim 3, wherein the battery apparatuses (1) in odd-numbered columns comprise three adjacent columns of battery apparatuses (1), the three adjacent columns of battery apparatuses (1) are divided into two columns of connecting units, and each column of battery apparatuses (1) except the three adjacent columns of battery apparatuses (1) are treated as a column of connecting units.

8. The battery pack according to claim 7, wherein the three adjacent columns of battery apparatuses (1) are sequentially the battery apparatuses (1) in an i^{th} column, the battery apparatuses (1) in a j^{th} column, and the battery apparatuses (1) in a k^{th} column,
the two columns of connecting units divided by the three adjacent columns of battery apparatuses (1) comprise two second connecting units (42), one of the second connecting units (42) is formed by at least two battery apparatuses (1) among the battery apparatuses (1) in the j^{th} column and the battery apparatuses (1) in the j^{th} column, and the other one of the second connecting units (42) is formed by at least two battery apparatuses among the battery apparatuses (1) in the j^{th} column and the battery apparatuses (1) in the k^{th} column.

9. The battery pack according to claim 2, further comprising conductor bars (3), wherein the conductor bars (3) are configured to be connected to the lead-out terminal busbars (2) of the battery apparatuses (1) and/or the battery disconnect unit (5), so as to connect the battery apparatuses (1) or connect the battery apparatuses (1) to the battery disconnect unit (5).

10. The battery pack according to claim 9, further comprising the battery disconnect unit (5), wherein the battery disconnect unit (5) is provided with a relay, one end of each of the conductor bars (3) is connected to the lead-out terminal busbars (2), the other end of each of the conductor bars (3) is connected to the relay, and the battery disconnect unit (5) is disposed at one side adjacent to total output terminals of the battery pack.

11. The battery pack according to claim 9, wherein the conductor bars (3) are copper bars.

12. The battery pack according to any one of claims 1-11, wherein the lead-out terminal busbars (2) are aluminum bars.

13. The battery pack according to any one of claims 1-11, wherein each of the lead-out terminal busbars (2) comprises at least two connecting branches.

14. The battery pack according to any one of claims 1-11, wherein each of the connecting branches is provided with a mounting hole (20).

## Amended claims

### Amended claims in accordance with Rule 137(2) EPC.

1. A battery pack, comprising a plurality of battery modules (1), wherein each battery modules (1) comprises lead-out terminal busbars (2), and the lead-out terminal busbars (2) are disposed at end portions of each battery module (1) in a battery arrangement direction that is perpendicular to larger surfaces of batteries of the battery modules (1), wherein at least one of the lead-out terminal busbars (2) has at least two connecting branches, and the at least two connecting branches are configured to be respectively connected to a battery disconnect unit (5) and/or other battery modules (1) in the battery pack,
wherein each battery module (1) comprises two lead-out terminal busbars (2), and the two lead-out terminal busbars (2) are respectively disposed at two end portions of each battery module (1) in the battery arrangement direction,
the battery modules (1) are arranged in odd-numbered columns, the odd-numbered columns are greater than 1 column, the battery modules (1) in the odd-numbered columns are divided into connecting units in even-numbered columns, and a column direction of the connecting units is consistent with a column direction of the battery modules (1),
the connecting units in the even-numbered columns comprise first connecting units (41) and second connecting units (42), each first connecting unit (41) comprises the battery modules (1) in one column of battery modules (1), each second connecting unit (42) comprises the battery modules (1) in at least two adjacent columns of battery modules (1), the connecting units in each column are connected in series in sequence, and two total output terminals formed after the connecting units are connected in series are located at a same side of the battery pack.

2. The battery pack according to claim 1, wherein the columns of battery modules (1) in the second connecting units (42) are respectively connected to different connecting branches of a corresponding one of the lead-out terminal busbars (2) of the battery modules (1) in the first connecting units (41).

3. The battery pack according to claim 1, wherein the connecting units in each column are connected in series in sequence in a 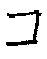 shape or in a 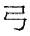 shape.

4. The battery pack according to claim 1, wherein the second connecting units (42) in two adjacent columns of connecting units are arranged in an alternating manner.

5. The battery pack according to claim 1, wherein the battery modules (1) in odd-numbered columns comprise three adjacent columns of battery modules (1), the three adjacent columns of battery modules (1) are divided into two columns of connecting units, and each column of battery modules (1) except the three adjacent columns of battery modules (1) are treated as a column of connecting units.

6. The battery pack according to claim 5, wherein the three adjacent columns of battery modules (1) are sequentially the battery modules (1) in an i^{th} column, the battery modules (1) in a j^{th} column, and the battery modules (1) in a k^{th} column,
the two columns of connecting units divided by the three adjacent columns of battery modules (1) comprise two second connecting units (42), one of the second connecting units (42) is formed by at least two battery modules (1) among the battery modules (1) in the j^{th} column and the battery modules (1) in the j^{th} column, and the other one of the second connecting units (42) is formed by at least two battery apparatuses among the battery modules (1) in the j^{th} column and the battery modules (1) in the k^{th} column.

7. The battery pack according to claim 1, further comprising conductor bars (3), wherein the conductor bars (3) are configured to be connected to the lead-out terminal busbars (2) of the battery modules (1) and/or the battery disconnect unit (5), so as to connect the battery modules (1) or connect the battery modules (1) to the battery disconnect unit (5).

8. The battery pack according to claim 7, further comprising the battery disconnect unit (5), wherein the battery disconnect unit (5) is provided with a relay, one end of each of the conductor bars (3) is connected to the lead-out terminal busbars (2), the other end of each of the conductor bars (3) is connected to the relay, and the battery disconnect unit (5) is disposed at one side adjacent to total output terminals of the battery pack.

9. The battery pack according to claim 7, wherein the conductor bars (3) are copper bars.

10. The battery pack according to any one of claims 1-9, wherein the lead-out terminal busbars (2) are aluminum bars.

11. The battery pack according to any one of claims 1-9, wherein each of the lead-out terminal busbars (2) comprises at least two connecting branches.

12. The battery pack according to any one of claims 1-9, wherein each of the connecting branches is provided with a mounting hole (20).
